# EUROPÄISCHE PATENTSCHRIFT

(11) **EP 0 641 463 B1**
(45) Veröffentlichungstag und Bekanntmachung des Hinweises auf die Patenterteilung: **12.03.1997**
(21) Anmeldenummer: 93908826.6
(22) Anmeldetag: 03.05.1993
(51) Int. Cl.: G05D 1/02

(54) **Verfahren zur Kartographierung eines Raumes und eine autonome selbstbewegliche Vorrichtung zur Durchführung des Verfahrens**
Procedure for mapping of a room and autonomous self-propelled device for carrying out the procedure
Procédé pour établir des cartes d'un espace et dispositif autonome et automoteur pour réaliser ce procédé

(30) Priorität: 22.05.1992 DE 4217093
(43) Veröffentlichungstag der Anmeldung: 08.03.1995
(73) Patentinhaber: SIEMENS AKTIENGESELLSCHAFT, 80333 München (DE)
(72) Erfinder: FEITEN, Wendelin, D-85579 Neubiberg (DE); MÖLLER, Marcus, D-81739 München (DE); NEUBAUER, Werner, D-81547 München (DE)
(86) Internationale Anmeldenummer: DE9300385
(87) Internationale Veröffentlichungsnummer: WO9324874

(56) Entgegenhaltungen:
- EP-A- 0 411 498
- DE-A- 3 536 974
- FR-A- 2 633 740
- GB-A- 2 231 416
- US-A- 3 095 939

## Beschreibung

Die Erfindung betrifft ein Verfahren zur Kartographierung eines Raumes und eine autonomie selbstbewegliche Vorrichtung zur Durchführung des Verfahrens.

Heutzutage gibt es vielfältige Einsatzmöglichkeiten für autonom operierende mobile Einheiten. Man denke in diesem Zusammenhang an Fernerkundüngssonden, an mobile Einheiten, die in Gefahrengebieten operieren, an selbstbewegliche Industriestaubsauger, an Transportfahrzeuge in der Fertigungsindustrie usw. Um diesen autonom operierenden selbstbeweglichen Einheiten einen größtmöglichen Bewegungspielraum und einen flexiblen Einsatz zu gewährleisten, ist es häufig wünschenswert und sinnvoll, daß diese Einheiten zunächst ihren Arbeitsraum markieren und erkunden. Bisher werden häufig Verfahren verwendet, bei denen der Arbeitsraum vorab markiert wird (Barcodes für Lasertriangulation (1), Transponder (3), Leitlinien (2)), so daß mobile Systeme sich an diesen Marken orientieren können. Diese Verfahren haben alle den Nachteil, daß sie aufwendig sind und daß sie die Flexibilität des Systemeinsatzes begrenzen.

Eine weitere bekannte Möglichkeit besteht in dem Einsatz aufwendiger Sensorik mit der in dem Arbeitsraum vorhandenen Landmarken extrahiert werden und die als Orientierungshilfe für das selbstbewegliche autonome System dienen (4). Dabei besteht der Nachteil in der sehr aufwendigen Sensorik und der Notwendigkeit des Vorhandenseins von Landmarken in der Einsatzumgebung.

Aus DE 35 36 974 A1 ist eine bedienerlose außengesteuerte Maschine sowie ein Verfahren zur deren Außensteuerung bekannt, die insbesondere gewährleistet, daß von der Maschine mit hinreichender Genauigkeit eine vorgegebene Fahrstrecke abgefahren wird. Die Ausführungsform nach Figur 3 erzeugt als Markierungsmittel eine nicht permanente Leitspur, bestehend aus einem linienförmigen Streifen aus einer mittels Sensoren erkennbaren Substanz, vorzugsweis aus einer Flüssigkeit oder aus einem pulverförmigen Feststoff, wobei
der die Leitspur bildende Streifen von der Maschine während der Fahrt kontinuierlich ausgebracht wird und
die Maschine zumindest einseitig an ihrer Unterseite wenigstens einen den die Leitspur bildenden Streifen erkennenden Sensor aufweist.

Die Maschine weist außerdem eine elektrische oder elektronische Einheit auf, welche bei einer Abweichung des Sensors bzw. der Sensoren von den Streifen entsprechende Korrekturen der Geschwindigkeit und/oder Fahrtrichtung der Maschine vornimmt.

Der Startpunkt der Maschine in einer Ecke des Raumes wird hierbei von einer Bedienperson festgelest und somit nicht selbsttätig bestimmt.

Die der Erfindung zugrundeliegende Aufgabe besteht davin, eine bewegliche Vorrichtung und ein Verfahren zur Kartographierung eines Raumes anzugeben, bei denen der Raum keine besonderen erkundungsspezifischen Merkmale aufweisen muß.

Diese Aufgabe wird durch das Verfahren nach Anspruch 1 und die Vorrichtung nach Anspruch 2 gelöst.

Alle übrigen Weiterbildungen der Erfindung ergeben sich aus den untergeordneten Ansprüchen.

Ein Vorteil bei der vorliegenden Erfinaung besteht darin, daß sie selbstständig Räume markieren kann.

Besonders günstig ist es beim Erkennen und Markieren von Räumen mit der Raumbegrenzung zu beginnen.

Weiterhin vorteilhaft ist es, daß die erfindungsgemäße Vorrichtung selbstständig mit einem Sensor Hindernisse erkennt.

Ein besonderer Vorteil der erfundenen Vorrichtung besteht darin, Markierungsmittel zu verwenden, die aie Vorrichtung sowieso enthält, z.B. ein Netzkabel oder entfernbare Markierungsmittel, wie Metallplättchen mitzuführen und diese als Markierung zu verwenden, da nicht unnötig viele Markierungsmittel mitbefördert werden müssen.

Günstig ist es in der erfundenen Vorrichtung, den Sensor auch zum Erkennen der Markierungsmittel einzusetzen, da so nur ein Sensor mitgeführt werden muß.

Besonders vorteilhaft ist der Einsatz eines Ultraschallsensors bei der erfindungsgemäßen Vorrichtung. Damit kann auf eine Beleuchtung verzichtet werden und es gibt genügend bekannte Verfahren, die sich auf Ultraschallorientierung stützen.

Ein weiterer günstiger Sensor für die Erfindung ist eine Kamera, da damit einfach Markierungsmittel und Hindernisse erkannt werden können.

Bei dem erfindungsgemäßen Verfahren wird zunächst eine Raumbegrenzung durch den Sensor festgestellt, dann bewegt sich die Vorrichtung entlang dieser Raumbegrenzung, bringt dabei Markierungen an und kehrt dann nach dem Auftreffen auf eine weitere Begrenzung des Raumes um und bewegt sich entlang der zuvor angebrachten Markierungen zurück , wobei dieser Vorgang solange wiederholt wird bis der ganze Raum durchfahren wurde. So wird sichergestellt, daß in optimaler Weise der ganze Raum von der Vorrichtung erkundet und kartographiert wird.

Hierbei wird der Raum kartographiert und dadurch seine Geometrie festgehalten, so daß für künftige Einsätze keine weitere Erkundung erforderlich ist.

Im folgenden wird die Erfindung an einem Ausführungsbeispiel weiter erläutert.

Figur 1 zeigt eine erfindungsgemäße Vorrichtung beim Anbringen der Markierung und beim Ausführen des Verfahrens.

Figur 2 zeigt die erfindungsgemäße Vorrichtung bei der Aufnahme der Markierungen und der gleichzeitigen Anbringung von neuen Markierungen.

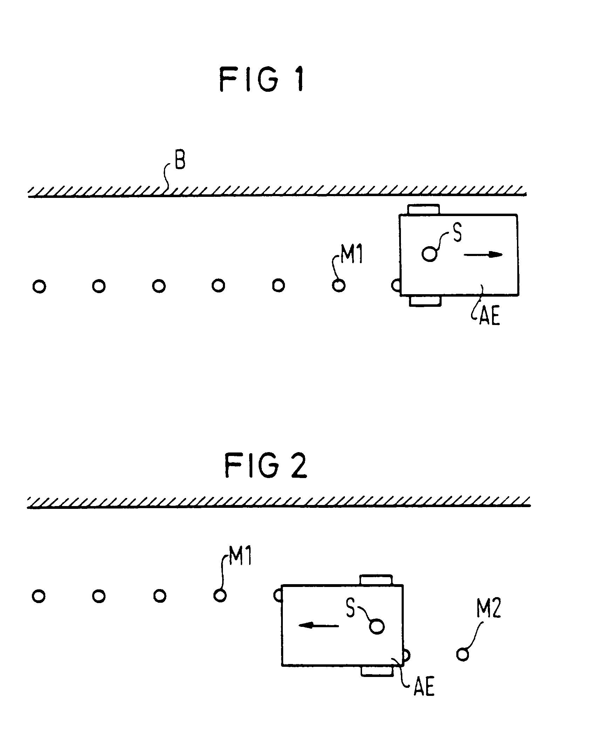

In Figur 1 ist eine selbstbewegliche Vorrichtung AE dargestellt, die sich in einem zu erkundeten Raum bewegt. Es ist eine Raumbegrenzung B dargestellt, und es sind Markierungen Ml zu sehen. Die selbstbewegliche Vorrichtung besitzt einen Sensor, der es ihr ermöglicht, die Raumbegrenzung und die Markierungen Ml zu erkennen. Bei der Erkundung des unbekannten Raumes geschieht folgendes:

Die selbstbewegliche Vorrichtung AE erkennt mit ihrem Sensor S die Raumbegrenzung B. Sie bewegt sich in Richtung der Raumbegrenzung B und fährt alsdann parallel zur Raumbegrenzung in die mit Pfeilrichtung angedeutete Bewegungsrichtung. Dabei bringt sie in regelmäßigen Abständen Markierungen Ml an, welche sich entfernt von der Raumbegrenzung befinoen, wie es in der Figur dargestellt ist. Die hier angebrachten Markierungen Ml können beispielsweise Metallplättchen sein. Es ist aber auch denkbar, daß die selbstbewegliche Vorrichtung während ihrer Bewegung das Netzkabel auslegt und dies als Markierung verwendet. Weitere Möglichkeiten der Markierung bestehen in Duftmarkierungen oder chemischen Markierungen.

Während sich die selbstbewegliche Vorrichtung fortbewegt und Markierungen anbringt, kann sie auch gleichzeitig eine Funktion ausüben. Diese Funktion kann beispielsweise ein Staubsaugevorgang sein. Es ist aber auch denkbar, daß z.B. Flächen mit Farbe versehen werden oder daß die Vorrichtung andere Stoffe aufbringt oder aufsammelt oder ähnliche Tätigkeiten durchführt.

Die selbstbewegliche Vorrichtung fährt solange in der mit Pfeil dargestellten Bewegungsrichtung weiter bis sie auf eine weitere Raumbegrenzung B trifft. Solange führt sie auch ihre Markierungstätigkeit durch. An der Raumbegrenzung angekommen wendet die selbstbewegliche Vorrichtung AE. Alles weitere ist dann in Figur 2 dargestellt.

Figur 2 zeigt die selbstbewegliche Vorrichtung AE, die sich entlang von Markierungen Ml bewegt. Diese selbstbewegliche Vorrichtung AE besitzt einen Sensor S mit dem sie Markierungen Ml, die sie zuvor ausgelegt hat, erkennt. Dieser Sensor bewirkt, daß sich die Vorrichtung entlang der Markierungen bewegen kann.

Während sich die selbstbewegliche Vorrichtung entlang den Markierungen Ml bewegt, nimmt sie diese beispielsweise wieder auf und legt sie entlang einer ca. vorrichtungsbreiten Bahn wieder als Markierungen M2 aus. Es können die Markierungen Ml durchaus mit den Markierungen M2 identisch sein. Hier soll nur gezeigt werden, daß sie sich dann an einer anderen Stelle befinden, wenn sie von der Vorrichtung AE ausgelegt werden. Bei ihrem Bewegungsvorgang kann die Vorrichtung, wie auch in Figur 1 bereits beschrieben, eine Tätigkeit ausführen. Die Bewegung der selbstbeweglichen Vorrichtung AE in Pfeilrichtung erfolgt solange, bis sie wieder auf eine Begrenzung des zu erkundenden Raumes trifft. Anschließend wendet die Vorrichtung und bewegt sich mit Hilfe des Sensors an den zuvor ausgelegten Markierungen M2 entlang in Gegenrichtung durch den zu erkundenden Raum. Die Vorgehensweise ist dabei analog wie zuvor beschrieben. Die Vorrichtung kann nun weiterhin neue Markierungen auslegen, während sie die Markierungen M2 aufnimmt.

Dieser Bewegungs- und Markierungsvorgang erfolgt solange, bis der gesamte Raum durchfahren wurde. Durch dieses erfindungsgemäße Verfahren und die erfundene Vorrichtung wird sichergestellt, daß eine genaue Bestimmung der Position der Vorrichtung ermöglicht wird und daß ein optimaler Überlapp der Bewegungsbahnen gewährleistet werden kann.
(1) Wiklund, U., Anderson, U., Hyyppa, K., Gelders, L.F., "AGV navigation by angle measurements"
   Automated Guided Vehicle Systems. Proceedings of the 6th International Conference, AGVS-6, Brussels, Belgium 25-26 Oct. 1988, p. 199 - 212, Kempston, UK IFS Publications 1854230247
(2) Fahringer, B.J.,
   "AGVS and automation: getting there"
   Production (USA) vo. 101, no. 7 p 35-9, July 1989
(3) Hill, L.,
   "Improvements in inductive communications for wireguided AGVs"
   Automated Guided Vehicle Systems.Proceedings of the 7th International Conference. Technology for Tomorrow, Berlin, West Germany 13-14 June 1989, p. 69-81 vi + 160 1989, Bedford,UK IFS 1854230484
(4) Robins, M.P.,
   "Free-ranging automatic guided vehicle System" GEC Rev.(GB), vol. 2, no. 2, p. 129 - 32, 1986

## Patentansprüche

1. Verfahren zur kartographierung eines Raumes,
a) bei dem in einem ersten Schritt mittels eines Sensors eine Begrenzung (B) des Raumes festgestellt wird,
b) bei dem in einem weiteren Schritt sich eine selbstbewegliche Vorrichtung (AE) an die Begrenzung (B) des Raumes bewegt,
c) bei dem in einem weiteren Schritt sich die Vorrichtung (AE) entlang der Begrenzung (B) bewegt und dabei entlang ihres Weges von der Begrenzung (B) entfernt Markierungen (M1) anbringt,
d) bei dem in einem weiteren Schritt die Vorrichtung (AE) beim Auftreffen auf eine weitere Begrenzung des Raumes umkehrt unc sich an den zuvor angebrachten Markierungen (M1) orientierend bewegt und von den zuvor angebrachten Markierungen (M1) entfernt weitere Markierungen (M2) anbringt,
e) bei dem die Schritte c) und d) solang durchgeführt werden, bis der gesamte Raum erkundet wurde,
f) und bei dem die Geometrie des Raumes für eine weitergehende Auswertung festgehalten wird.

2. Autonome selbstbewegliche Vorrichtung zur Durchführung des Verfahrens nach Anspruch 1
a) bei der wenigstens ein Sensor (S) vorgesehen ist der Hindernisse und Markierungsmittel (M1, M2) erkennt,
b) bei der Mittel zum Markieren (M1, M2) des Raumes vorgesehen sind,
c) und bei der Mittel zum Festhalten der Geometrie des Raumes vorgesehen sind, um diesen zu Kartographieren.

3. Vorrichtung nach Anspruch 2, bei der der Sensor (S) die Raumoegrenzung (B) erkennt.

4. Vorrichtung nach einem der Ansprüche 2 oder 3, bei der die Mittel zum Markieren (M1, M2) Metallplättchen oder das Netzkabel der Vorrichtung (AE) sind.

5. Vorrichtung nach einem der Ansprüche 2 bis 4, bei der die Vorrichtung (AE) ein weiteres Mittel aufweist aus die Markierung (M1,M2) nach Verwendung wieder entfernt.

6. Vorrichtung nach einem der Ansprüche 2 bis 5, bei der der Sensor (S) ein Ultraschallsensor ist.

7. Vorrichtung nach einem der Ansprüche 2 bis 6, bei der der Sensor (S) eine Kamera ist.

## Claims

1. Process for mapping an area,
a) in which, in a first step, a boundary (B) of the area is established by means of a sensor,
b) in which, in a further step, a self-propelled device (AE) moves up to the boundary (B) of the area,
c) in which, in a further step, the device (AE) moves along the boundary (B) and when doing so applies along its path markings (M1) at a distance from the boundary (B),
d) in which, in a further step, the device (AE) turns around when it encounters a further boundary of the area and moves, taking its bearings from the previously applied markings (M1), and applies further markings (M2) at a distance from the previously applied markings (M1),
e) in which the steps c) and d) are carried out until the entire area has been explored,
f) and in which the geometry of the area is recorded for further evaluation.

2. Autonomous self-propelled device for carrying out the process according to Claim 1,
a) in which at least one sensor (S) is provided, which detects obstacles and marking means (M1, M2),
b) in which means for marking (M1, M2) the area are provided,
c) and in which means for recording the geometry of the area are provided in order to map the latter.

3. Device according to Claim 2, in which the sensor (S) detects the area boundary (B).

4. Device according to one of Claims 2 or 3, in which the means for marking (M1, M2) are small metal plates or the power cable of the device (AE).

5. Device according to one of Claims 2 to 4, in which the device (AE) has a further means which removes the marking (Ml,M2) again after use.

6. Device according to one of Claims 2 to 5, in which the sensor (S) is an ultrasonic sensor.

7. Device according to one of Claims 2 to 6, in which the sensor (S) is a camera.

## Revendications

1. Procédé de cartographie d'un espace,
a) dans lequel, dans une première étape, une délimitation (B) de l'espace est reconnue au moyen d'un capteur,
b) dans lequel, dans une autre étape, un dispositif automatique (AE) se déplace jusqu'à la délimitation (B) de respace,
c) dans lequel, dans une autre étape, le dispositif (AE) se déplace le long de la délimitation (B) et applique sur son chemin, à distance de la délimitation (B), des marquages (M1),
d) dans lequel, dans une autre étape, le dispositif (AE) fait demi-tour lorsqu'il rencontre une autre délimitation de l'espace et se déplace en s'orientant aux marquages (M1) appliqués auparavant et applique, à distance des marquages (M1) appliqués auparavant, d'autres marquages (M2),
e) dans lequel les étapes c) et d) sont répétées autant de fois que nécessaire pour explorer tout l'espace,
f) et dans lequel la géométrie de l'espace est conservée pour une exploitation ultérieure.

2. Dispositif automatique autonome permettant la mise en oeuvre du procédé selon la revendication 1,
a) dans lequel est prévu au moins un capteur (S) qui reconnaît des obstacles et les moyens de marquage (M1, M2),
b) dans lequel sont prévus des moyens permettant le marquage (M1, M2) de l'espace,
c) et dans lequel sont prévus des moyens permettant de conserver la géométrie de l'espace dans le but d'une cartographie.

3. Dispositif selon la revendication 2, dans lequel le capteur (S) reconnaît la délimitation d'espace (B).

4. Dispositif selon l'une des revendications 2 ou 3, dans lequel les moyens de marquage (M1, M2) sont des plaquettes métalliques ou le câble de réseau du dispositif (AE).

5. Dispositif selon l'une des revendications 2 à 4, dans lequel le dispositif (AE) comporte un autre moyen qui supprime le marquage (M1, M2) après l'utilisation.

6. Dispositif selon l'une des revendications 2 à 5, dans lequel le capteur (S) est un capteur à ultrasons.

7. Dispositif selon l'une des revendications 2 à 6, dans lequel le capteur (S) est une caméra.
